# EUROPÄISCHE PATENTSCHRIFT

(11) **EP 1 379 153 B1**
(45) Veröffentlichungstag und Bekanntmachung des Hinweises auf die Patenterteilung: **01.03.2006**
(21) Anmeldenummer: 02735168.3
(22) Anmeldetag: 20.03.2002
(51) Int. Cl.: A47J 31/06, A47J 31/40

(54) **MAGAZINEINHEIT MIT EINER LESEEINRICHTUNG ZUR ERFASSUNG EINER KENNUNG AUF EINER KAFFEEMEHL ENTHALTENDEN PORTIONSEINHEIT FÜR ESPRESSOMASCHINEN SOWIE PRÜFVERFAHREN FÜR DIE KENNUNG**
MAGAZINE WITH READING DEVICE FOR DETECTING A IDENTIFIER ON A PORTION PACKAGE, WHICH CONTAINS GROUND COFFEE, FOR ESPRESSO MACHINES AND TEST METHOD
MAGASIN AVEC DISPOSITIF POUR LIRE UNE CARACTERISTIQUE SUR UNE DOSE UNITAIRE CONTENANT DU CAFE EN POUDRE POUR MACHINES A CAFE ESPRESSO ET PROCÉDÉ DE TEST

(30) Priorität: 31.03.2001 DE 10116239
(43) Veröffentlichungstag der Anmeldung: 14.01.2004
(73) Patentinhaber: Eugster/Frismag AG, 8590 Romanshorn (CH); Mahlich, Gotthard, Dipl.-Ing., 61476 Kronberg (DE)
(72) Erfinder: MAHLICH, Gotthard, 61476 Kronberg (DE)
(74) Vertreter: Schubert, Siegmar
(86) Internationale Anmeldenummer: PCT/EP2002/003282
(87) Internationale Veröffentlichungsnummer: WO 2002/078498

(56) Entgegenhaltungen:
- EP-A- 0 972 481
- FR-A- 2 625 348

## Beschreibung

Die Erfindung betrifft eine Magazineinheit, mit einer Leseeinrichtung zu einer Erfassung einer Kennung auf einer Kaffeemehl enthaltenden Portionseinheit nach dem Oberbegriff des Anspruchs 1.

Noch ein weiterer Aspekt der Erfindung betrifft ein Prüfverfahren für die maschinell lesbare Kennung.

Die Erfindung geht aus von Portionseinheiten zur vereinfachten Beschickung von Espressomaschinen mit Kaffeepulver. Als Portionseinheiten werden zunehmend entweder Portionskapseln oder sogenannte Pouches eingesetzt. Die Pouches schließen eine bestimmte Menge vorportionierten Kaffees in einer Hülle aus durchlässigem, Kaffeefilterpapier-ähnlichem Material ein und haben gegenüber einer früher üblichen Beschickung eines Espressomaschinen-Brühkopfes mit Schüttpulver den Vorteil, daß sie bereits eine für die Cremabildung wichtige Vorpressung des Kaffeepulvers aufweisen. Die Portionskapseln bestehen meist aus einer tiefgezogenen Kunststoff- oder Aluminiumfolie und haben gegenüber den Pouches den Vorteil, daß sie luftdicht verschlossen und bei einigen Herstellern mit einem, das Kaffeearoma erhaltendem Schutzgas gefüllt sind. Solche vorportionierten Portionseinheiten werden mit ca. 10 verschiedenen Kaffeefüllungen angeboten. Diese Variationsbreite hat für den Konsumenten den Vorteil, auch kleinere Mengen unterschiedlicher Kaffeesorten bevorraten zu können. Außerdem ergeben diese Portionseinheiten in Verbindung mit speziellen Brühköpfen in Espressomaschinen, die für diese Portionseinheiten ausgerüstet sind, zuverlässig ein gleichmäßig optimales Brühergebnis.

Derartige, z.B. aus der EP-A-1 046 366 bekannte Espressomaschinen haben ein Vorratsmagazin, in dem Portionseinheiten mit unterschiedlichem Inhalt sortiert gelagert sind und im Ablauf eines automatisch ablaufenden Brühvorgangs aus dem Vorratsmagazin in den Brühkopf transportiert werden. Im einzelnen besteht das Vorratsmagazin aus auf einen Drehteller angeordneten Kartuschen, die auch als Magazinröhren bezeichnet werden. In diesen Magazinröhren sind die einzelnen Portionseinheiten gestapelt. Um die unterschiedlichen Kaffeesorten sortiert getrennt halten und anwählen zu können, wird in jeweils eine Magazinröhre nur eine bestimmte Kaffeesorte gefüllt. Bei Beginn der Zubereitung wird dann eine angewählte Magazinröhre mit dem Magazinteller in eine Entnahmeposition gedreht, um die gewünschte Kaffeesorte zu erhalten. Hierzu wird die zu unterst liegende Portionseinheit in eine Brühkammer des Brühkopfes gefördert. Um die gewünschte Kaffeesorte aufzubrühen, ist vorzugsweise jede Magazinröhre mit einem Sichtfenster versehen, durch welches ein Benutzer die Kaffeesorte beispielsweise durch eine ihr zugeordnete Farbe der Portionseinheit erkennen kann. Als denkbar wird es auch bezeichnet, auf den Portionseinheiten einen Code aufzubringen, der mit einem Lesegerät erfaßt werden kann, so daß der Inhalt der Portionseinheiten auf elektronischem Weg erkannt werden kann. - Letztere Maßnahme hat jedoch in den aus der Praxis bekannten Espressomaschine keinen Eingang gefunden. Dies mag auf die Schwierigkeit zurückzuführen sein, daß ein üblicher linear strukturierter Code zum Auslesen mit einem einfachen linear lesenden Lesekopf entweder bezüglich der Position des Lesegeräts richtig ausgerichtet sein muß, was insbesondere bei der üblicherweise aus fertigungstechnischen Gründen systembedingt rotationssymmetrischen Ausführung von Portionskapseln und Pouches schwierig ist, oder aber einen aufwendigen und voluminösen Doppel-Spiegel-Scanner als Lesegerät voraussetzt.

Bekannt ist es auch, eine rotationssymmetrisch strukturierte Kennung, insbesondere einen solchen Barcode zur Identifizierung von Artikeln wie Metallgehäusen, Flaschen oder Jetons für Spielautomaten bzw. automatische Abgabeeinrichtungen einzusetzen, wobei die Kennung auf einer scheibenförmigen Oberfläche aufgebracht ist (FR-A-2 625 348). Diese Barcodes können in beliebiger Richtung, also auch unabhängig von der Orientierung der Artikel, ausgelesen werden. - Es ist jedoch hieraus nicht bekannt, wie Espressomaschinen auszubilden sind, damit diese vor ihrer Hauptfunktion der Espressoerzeugung in geeigneter Weise Portionskapseln mit Kaffeemehl identifizieren.

Hingegen hat sich in der Praxis eine Farbkennung von Portionskapseln entsprechend deren Inhalt durchgesetzt, die es dem Benutzer erlaubt, aber nicht gewährleistet, die Magazinröhren des Vorratsmagazins richtig zu befüllen und vor einem Brühvorgang auszuwählen bzw. einzustellen. Für eine automatische Anwahl einer der Magazinröhren, bei der die gewünschte Kaffeesorte mittels einer Wahltastatur oder eines Wahl-Drehschalter eingegeben wird, können dann entweder die Magazinröhren eine maschinell lesbare Kennung tragen oder die jeweilige Position des Drehtellers wird über eine Elektronik, ausgehend von einer Referenzposition, errechnet und gespeichert. Dieses System, welches eine richtige manuelle Bestückung der Magazinröhren voraussetzt, kann jedoch Bestückungsfehler und damit zwangsläufig eine falsche automatisierte Auswahl einer Kaffeesorte nicht zuverlässig verhindern, wodurch beispielsweise bei der Verwechslung von koffeinhaltigen und entkoffeinierten Kaffeesorten fatale Folgen entstehen können.

Der vorliegenden Erfindung liegt daher die Aufgabe zugrunde, eine Magazineinheit zu schaffen, in der die auszuwählenden Portionseinheiten selbst mit einer geeigneten, maschinell lesbaren Kennung versehen sind und in der die Kennung zuverlässig mit einem unkomplizierten Lesekopf gelesen werden kann, der kompakt und geschützt in der Magazineinheit angeordnet ist. Das Lesen der Kennung soll somit keinen komplizierten voluminösen Doppel-Spiegel-Scanner zum Lesen voraussetzen und keine genaue Ausrichtung der Portionseinheit bezüglich des Scanners bzw. eines Lesekopfs eines Scanners. Insbesondere soll die schwierige Ausrichtung einer rotationssymmetrischen Portionseinheit entfallen können, die üblicherweise als Portionskapsel im wesentlichen kegelstumpfförmig oder als Pouch im wesentlichen linsenförmig ausgebildet ist.

Diese Aufgabe wird in unkomplizierter Weise gemäß dem kennzeichnenden Teil des Anspruchs 1 unter der Verwendung von Portionseinheiten gelöst, auf denen die Kennung rotationssymmetrisch strukturiert ist und auf einer im wesentlichen ebenen Fläche der Portionseinheit angeordnet ist.

Bei der erfindungsgemäßen Lösung wird durch direkte Abtastung bzw. unmittelbares Lesen der Kennung an der Portionseinheit, insbesondere einer Portionskapsel selbst und nicht eines der Portionskapsel willkürlich zugeordneten Teils des Vorratsmagazins gewährleistet, daß die als gewünscht ausgewählte Kaffeesorte mit der Portionseinheit identifiziert wird und nach Entnahme der Portionseinheit aus dem Vorratsmagazin aufgebrüht wird. Die Kennung kann mit einem unkomplizierten, kompakten linear lesenden Lesekopf einfach und zuverlässig gelesen werden, der die rotationssymmetrische Kennung erfaßt. Hingegen kommt es auf die Drehlage oder Winkelstellung der rotationssymmetrischen Kennung zu dem linear lesenden Lesekopf nicht an, was die Ausrichtung der Portionseinheit bezüglich des Lesekopfs entscheidend vereinfachen kann. Darüber hinaus eignet sich die rotationssymmetrische Kennung für ein einfaches Prüfverfahren gemäß Anspruch 6.

Der oben genannte Vorteil, daß es auf die Drehstellung bzw. Winkelstellung der Portionseinheit bezüglich des Lesekopfes nicht ankommt, gilt besonders bei einer rotationssymmetrischen Portionseinheit, welche um ihre Symmetrieachse keine durch ihre Form definierte Vorzugslage hat. In diesem Fall ist die Kennung vorzugsweise um diese Symmetrieachse rotationssymmetrisch strukturiert. Somit erfaßt der linear lesenden Lesekopf die Kennung völlig unabhängig von der Drehstellung bzw. Winkelstellung der Portionseinheit, so daß eine in einer Magazinröhre magazinierte Portionseinheit bzw. die Art ihres Inhalts gemäß der Kennung unabhängig von der Drehlage der Portionseinheit in der Magazinröhre gelesen werden kann. Maßnahmen zu einer definierten Ausrichtung der Portionseinheiten in den Magazinröhren können insofern entfallen.

Insbesondere kann eine solche rotationssymmetrische Kennung als aus konzentrischen Kreisen gebildeter Barcode strukturiert sein. In diesem Fall können übliche linear lesende Leseköpfe eingesetzt werden. Mit dem Barcode als mehrstelligem binärem Code kann schon mit lediglich vier konzentrischen Kreisen eine große Vielzahl von Kaffeesorten zuverlässig gekennzeichnet werden.

In dem Fall, in dem die Portionseinheit eine Portionskapsel mit einem im wesentlichen runden Boden ist, wird die oben definierte Kennung koaxial auf dem Boden aufgebracht.

In dem Fall, in dem die Portionseinheit ein im wesentlichen linsenförmiger Pouch mit einer Oberseite und einer Unterseite ist, wird zweckmäßig die Kennung jeweils auf der Oberseite und auf der Unterseite koaxial aufgebracht. Es braucht dann nicht nur wegen des Lesens der Kennung bei dem Befüllen des Vorratsmagazins darauf geachtet zu werden, ob die Pouches mit ihrer Oberseite oder ihrer Unterseite nach unten eingelegt werden.

Die Kennungen der Portionseinheiten können nicht nur vorgesehen sein, eine Kaffeesorte zu kennzeichnen, sondern sie können auch eine elektronisch lesbare Herstellerkennung beinhalten, die in Verbindung mit einem angepaßten System der Auswertung und Steuerung der Espressomaschine die Espressomaschine blockiert, wenn die Herstellerkennung nicht mit einer in der Espressomaschine vorprogrammierten Herstellerinformation übereinstimmt.

Wie oben erwähnt, kann ein umkompliziertes System zur Erfassung der erfindungsgemäßen maschinenlesbaren Kennung auf einer Portionseinheit eine Erfassungseinrichtung mit mindestens einem linear lesenden Lesekopf umfassen. Der Lesekopf beinhaltet im wesentlichen einen Lesesensor bestehend aus einem Abtastsender einer Lichtmarke auf die Kennung bzw. eines Teils der Kennung und eines Decoderempfängers. An den Decoderempfänger kann sich eine Steuerungseinrichtung anschließen, mit der die Einstellung, insbesondere einer Magazineinheit, gesteuert werden kann, um Portionseinheiten mit dem gewünschten Kaffeeinhalt in eine Entnahmeposition zu bewegen.

Der linear lesende Lesekopf ist kompakt und geschützt unterhalb Magazinröhren der Magazineinheit angeordnet und nach oben auf eine Ebene gerichtet, in welcher die Böden der Portionskapseln in den Magazinröhren liegen, dergestalt, daß die rotationssymmetrische Kennung auf dem Boden der jeweils untersten Portionskapsel abgelesen werden kann.

Weiterhin weist in einer Espressomaschine, in der die Magazinröhren auf einem Träger angeordnet sind und wahlweise zusammen mit dem Träger in eine Entnahmeposition bewegbar sind, der Träger jeweils wenigstens unter den Magazinröhren eine zur Abtastung des Bodens der Portionskapsel durchlässigen Abschnitt auf. Der durchlässige Abschnitt kann insbesondere ein radial angeordnetes schlitzförmiges Sichtfenster sein.

Im einzelnen können nach Anspruch 2 unter jeder Magazinröhre ein durchlässiger Abschnitt und ein Abtastkopf angeordnet sein. Bei dieser Anordnung können die Kennungen sämtlicher unterster Portionskapseln in allen Magazinröhren parallel ausgelesen werden und auf der Grundlage der jeweils erfaßten Positionen der Kapseln mit den Kaffeesorten die Magazinröhre in die Entnahmeposition gefahren werden, die eine unterste Portionskapsel mit der gewünschten ausgewählten Kaffeesorte beinhaltet.

Vorteilhaft kann es aber auch genügen, gemäß Anspruch 3 für alle Magazinröhren nur einen Abtastkopf an einer Lesestation vorzusehen, die an einer Bewegungsbahn der zusammen mit dem Träger bewegbaren, zum Lesen der Kennungen durchlässigen Abschnitte des Trägers in Bewegungsrichtung vor der Entnahmestation angeordnet ist. Damit kann kontrolliert werden, ob eine Portionskapsel mit dem gewünschten Kaffeeinhalt in die Entnahmeposition bewegt wird, wobei die Bewegung nach Maßgabe gespeicherter Positionen der Portionskapseln mit den einzelnen Kaffeesorten gesteuert wird.

Die Erfindung läßt sich vorteilhaft in einer kompakten Espressomaschine nach Anspruch 5 einsetzen, in der die Magazinröhren im wesentlichen kreisförmig auf einem Drehteller als Träger angeordnet sind, wobei unterhalb des Drehtellers ein Maltesergetriebe angeordnet ist, welches mit dem Drehteller in Antriebsverbindung steht. Dabei kann der Drehteller durch die Erfassungseinrichtung, welche den Lesekopf bzw. die Leseköpfe zum Lesen der Kennungen der untersten Portionskapsel in den Magazinröhren beinhaltet, gesteuert verstellt werden.

Wie oben erwähnt, eignet sich die rotationssymmetrisch strukturierte Kennung auf einer Portionseinheit zur wenig aufwendigen Durchführung eines Prüfverfahrens gemäß Anspruch 6, nachdem insbesondere der aus konzentrischen Kreisen gebildete Barcode im wesentlichen über seinen größten Durchmesser, gebildet aus einem ersten Halbmesser und einem zweiten Halbmesser, linear ausgelesen wird und wobei die über den ersten Halbmesser ausgelesene Kennung mit der über den zweiten Halbmesser ausgelesenen Kennung verglichen wird. Bei richtiger Erfassung des Barcodes müssen die in beiden Fällen ausgelesenen Kennungen übereinstimmen. Andernfalls kann eine Espressomaschine, die zur Durchführung des Prüfverfahrens eingerichtet ist, aus Sicherheitsgründen gesperrt werden.

Ausführungsbeispiele der Erfindung werden im folgenden anhand einer Zeichnung beschrieben, woraus sich weitere Merkmale und Vorteile ergeben können. Es zeigen:
- Fig. 1: eine Seitenansicht auf eine Portionskapsel,
- Fig. 1a: eine Ansicht auf den Boden der Portionskapsel gemäß Figur 1,
- Figur 2: eine Seitenansicht auf ein Pouch,
- Figur 2a: eine Ansicht auf eine Oberseite oder eine Unterseite des Pouches,
- Figur 3: eine Seitenansicht auf ein System mit einer Magazineinheit, teilweise geschnitten, sowie mit einer Erfassungs-einrichtung und
- Figur 4: eine Draufsicht auf das System gem. Figur 3.

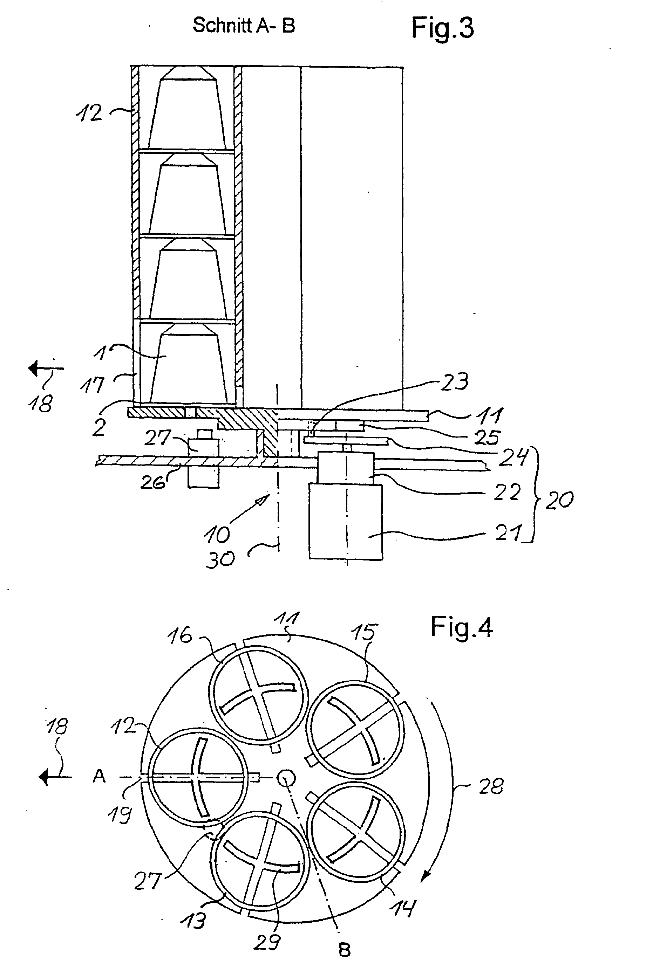

In den Figuren 3 und 4 sind Baugruppen, die nicht unmittelbar zur Erfassung einer Kennung der eingesetzten Portionskapseln dienen, regelmäßig nicht dargestellt.

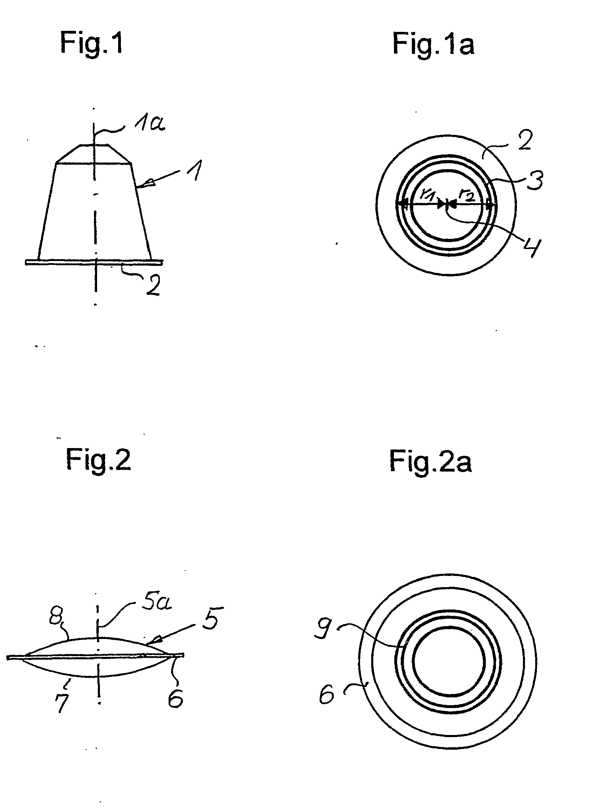

In den Figuren 1, 1a und 3 ist mit 1 eine Portionskapsel bezeichnet, die im wesentlichen kegelstumpfförmig um eine Symmetrieachse 1a rotationssymmetrisch ausgebildet ist.

Auf einem Boden 2 der Portionskapsel 1 ist ein aus konzentrischen Kreisen gebildeter Barcode 3 dargestellt, wobei die Kreise um einen Mittelpunkt 4 verlaufen, durch den auch die Symmetrieachse 1a der Portionskapsel hindurchgeht.

In den Figuren 2 und 2a ist eine Portion vorgepreßten Kaffeemehls enthaltender Pouch 5 dargestellt, der, mit Ausnahme eines Pouchrandes 6, im wesentlichen linsenförmig ausgebildet ist. Der Pouch 5 mit dem Pouchrand 6 verlaufen wiederum rotationssymmetrisch um eine Symmetrieachse 5a. Auf einer Unterseite 7 sowie auf einer Oberseite 8 des Pouches 5 ist jeweils ein aus konzentrischen Ringen bestehender Barcode 9 aufgetragen, der um die Symmetrieachse 5a rotationssymmetrisch verläuft.

Im nachfolgenden wird ein System mit einer Magazineinheit 10 anhand der Figuren 3 und 4 beschrieben, die zur Aufnahme von Portionskapseln 1 geeignet ist. Eine Magazineinheit für Pouches kann ähnlich ausgebildet sein.

Die Magazineinheit 10 besteht im wesentlichen aus einem Drehteller 11, auf dem in einer annähernd kreisförmigen Anordnung Magazinröhren 12 bis 16 befestigt sind. Jede der Magazinröhren ist zur Aufnahme eines Stapels von mit ihrem Boden 2 nach unten gerichteten Portionskapseln 1 geeignet, wobei jede der Magazinröhren 12 bis 16 jeweils Portionskapseln einer von mehreren zur Verfügung stehenden Kaffeearten aufnimmt. Jede der Magazinröhren weist dem nicht bezeichneten äußeren Rand des Drehtellers 11 benachbart eine Magazinröhrenausschuböffnung 17 auf, durch die hindurch jeweils die unterste Portionskapsel 1 durch nicht dargestellte Mittel aus der in eine Entnahmestation 18 bzw. Entnahmeposition gedrehten Magazinröhre ausgeschoben werden kann. Zu den zum Ausschub verwendeten Mitteln gehört geweils ein Kapselausschubschlitz 19, mit dem der Drehteller 11 unter jeder Magazinröhre, z.B. 12, bis zu dem Außenrand des Drehtellers unterbrochen ist.

Um eine Ausgewählte der Magazinröhren 12 bis 16 zur Entnahme einer Portionskapsel in die Entnahmestation 18 zu drehen, ist unterhalb des Drehtellers 11 ein allgemein mit 20 bezeichnetes Maltesergetriebe mit dem Drehteller 11 gekoppelt. Das Maltesergetriebe besteht im wesentlichen aus einem Antriebsmotor 21 mit einem Getriebe 22 und einem Malteser-Antriebsstift 23 auf einer Scheibe 24, die mit dem Getriebe in Verbindung steht. Der Malteser-Antriebsstift ist so angeordnet, daß er zwischen je zwei Malteser-Antriebsflanken eingreifen kann, von denen eine mit 25 bezeichnet ist und die mit dem Drehteller 11 in fester Verbindung stehen oder mit diesem eine Einheit bilden.

Das Maltesergetriebe 20 ist unterhalb des Drehtellers 11 an einem Trägerchassis 26 angebracht, auf dem auch der Drehteller 11 gelagert ist.

Das Trägerchassis 26 trägt auch einen Lesekopf 27, der im wesentlichen aus einem Abtastsender und einem Encoderempfänger besteht. Der Lesekopf 27 ist von unten so gegen den Drehteller 11 gerichtet, daß er die mit dem Boden nach unten gelagerten Portionskapseln 1 in den Magazinröhren 12 bis 16 erfassen und abtasten kann, wenn diese Magazinröhren über den Lesekopf 27 bewegt werden. Zu diesem Zweck ist der Drehteller 11 für eine Abtastung des Barcode wenigstens im Teilbereich des Barcode durchlässig ausgebildet; hierzu werden unter den Magazinröhren 12 bis 16 schlitzförmige Sichtfenster 29 verwendet, die in gleichen radialen Abständen zu einer Hauptachse 30 des Drehtellers 11, siehe Figur 3, angeordnet sind. Durch diese hindurch können die Barcodes 3 auf den Böden 2 der Portionskapseln über den größten Halbmessern r₁ und r₂ gemäß Figur 1 a der Barcodes erfaßt werden. In diesem Fall wird der Barcode 3 sowohl beim Einlaufen in die Lesestation als auch beim Auslaufen aus der Lesestation erfaßt, wenn der die Kennung tragende Boden 2 der Kapsel auf einer Kreisbahn den Lesekopf 27 überläuft, der in Drehrichtung 28 des Drehtellers gesehen, vor der Entnahmestation 18 angeordnet ist. Damit kann durch Vergleich der beiden erfaßten Barcodestellen und datentechnische Weiterverarbeitung gewährleistet werden, daß nur eine Portionskapsel 1 mit der gewünschten Kaffeesorte in die Entnahmestation 18 transportiert wird, nachdem diese Kaffeesorte beispielsweise mit einer nicht dargestellten Tastatur oder einem Drehschalter ausgewählt wurde.

### Bezugszahlenliste:

- 1: Portionskapsel
- 2: Boden
- 3: Barcode
- 4: Mittelpunkt
- 5: Pouch
- 6: Pouchrand
- 7: Unterseite
- 8: Oberseite
- 9: Barcode
- 10: Magazineinheit
- 11: Drehteller
- 12: Magazinröhre
- 13: Magazinröhre
- 14: Magazinröhre
- 15: Magazinröhre
- 16: Magazinröhre
- 17: Magazinröhren-Ausschuböffnung
- 18: Entnahmestation (bzw. position)
- 19: Kapselausschubschlitz
- 20: Malteser-Getriebe
- 21: Antriebsmotor
- 22: Getriebe
- 23: Malteser-Antriebsstift
- 24: Scheibe
- 25: Malteser-Antriebsflanke
- 26: Träger-Chassis
- 27: Lesekopf
- 28: Drehrichtung
- 29: Schlitzförmiges Sichtfenster
- 30: Hauptachse

## Patentansprüche

1. Magazineinheit (10) mit mehreren Magazinröhren (12 bis 16), in denen rotationssymmetrische Portionseinheiten, insbesondere Portionskapsein (1), mit unterschiedlichem Kaffeemehl und einer entsprechenden maschinenlesbaren Kennung gestapelt sind, sowie mit einer Erfassungseinrichtung der Kennung,
**dadurch gekennzeichnet,**
**daß** die Erfassungseinrichtung mindestens einen linear lesenden Lesekopf (27) umfaßt und daß der Lesekopf (27) unterhalb der Magazinröhren (12 bis 16) angeordnet ist und nach oben auf eine Ebene, in welcher Böden (2) der Portionseinheiten mit rotationssymmetrischen, vorzugsweise koaxialen Kennungen in den Magazinröhren (12 bis 16) liegen, dergestalt gerichtet ist, daß die Kennungen linear ablesbar sind.

2. Magazineinkeit nach Anspruch 1,
**dadurch gekennzeichnet,**
**daß** die Magazinröhren (12 bis 16) auf einem Träger angeordnet sind und wahlweise zusammen mit dem Träger in eine Entnahmeposition (18) bewegbar sind und daß der Träger unter jeder Magazinröhre (12 bis 16) eine zur Abtastung des Bodens (2) der Portionskapsel (1) durchlässigen Abschnitt aufweist.

3. Magazineinheit nach Anspruch 2,
**dadurch gekennzeichnet,**
**daß** für alle Magazinröhren (12 bis 16) nur ein Abtastkopf (27) an einer Lesestation vorgesehen ist, die an einer Bewegungsbahn der zusammen mit dem Träger bewegbaren, zum Lesen der Kennungen durchlässigen Abschnitte des Trägers in Bewegungsrichtung vor der Entnahmeposition (18) angeordnet ist.

4. Magazineinheit nach mindestens einem der Ansprüche 1 bis 3,
**dadurch gekennzeichnet,**
**daß** die Magazinröhren (12 bis 16) im wesentlichen kreisförmig auf einem Drehteller (11) als Träger angeordnet sind und daß unterhalb des Drehtellers (11) ein Maltesergetriebe (20) angeordnet ist, welches mit dem Drehteller (11) in Antriebsverbindung steht.

5. Magazineinheit nach einem oder mehreren der Ansprüche 1 bis 4,
**dadurch gekennzeichnet,**
**daß** der Träger bzw. der Drehteller (11) durch die Erfassungseinrichtung gesteuert verstellbar ist.

6. Prüfverfahren für eine maschinell lesbare Kennung auf einer Portionseinheit in einer Magazineinheit nach den Ansprüchen 1 bis 5,
**dadurch gekennzeichnet,**
**daß** ein aus konzentrischen Kreisen gebildeter Barcode (3) als rotationssymmetrisch strukturierte Kennung im wesentlichen über seinen größten Durchmesser, gebildet aus einem ersten Halbmesser (r₁) und einem zweiten Halbmesser (r₂) linear ausgelesen wird und daß die über den ersten Halbmesser (r₁) ausgelesene Kennung mit der über dem zweiten Halbmesser (r₂) ausgelesenen Kennung verglichen wird.

## Claims

1. Magazine (10) with several magazine tubes (12 to 16), in which rotationally symmetric portion packs, in particular portion capsules (1) cantaining different ground coffee varieties and bearing a corresponding automatically readable identifier are stacked, and with a detector device of the identifier,
**characterised in that**
the detector device comprises at least one linear-scan reading head (27), this reading head (27). being arranged under the magazine tubes (12 to 16) and directed upwards onto a plane in which the bottoms (2) of portion packs with rotationally symmetric, preferably coaxial identifiers in the magazine tubes (12 to 16) are located, in such manner that the identifiers can be linearly scanned and read.

2. Magazine according to Claim 1,
**characterised in that**
the magazine tubes (12 to 16) are arranged on a support and can be moved as desired together with the support to an extraction position (18), and under each magazine tube (12 to 16) the support has a transparent section to allow the bottom (2) of the portion capsule (1) to be scanned.

3. Magazine according to Claim 1,
**characterised in that**
for all the magazine tubes (12 to 16) only one scanning head (27) is provided at a reading station, which is arranged on a movemeut path of the transparent section of the support provided to allow reading of the identifier, that moves together with the support in the movement direction ahead of the extraction position (18).

4. Magazine according to at least one of Claims 1 to 3,
**characterised in that**
the magazine tubes (12 to 16) are arranged essentially in a circle on a turntable (11) as the support, and under the turntable (11) there is arranged a Maltese-cross transmission (20) which is in driving connection with the turntable (11).

5. Magazine according to at least one of Claims 1 to 3,
**characterised in that**
the support or turntable (11) can be moved in a controlled way by the detector device.

6. Test procedure for an automatically readable identifier on a portion pack in a magazine according to Claims 1 to 5,
**characterised in that**
a barcode (3) formed of concentric circles as a rotationally symmetrically structured identifier is read linearly across its maximum diameter formed of a first radius (r₁) and a second radius (r₂), and the identifier read from the first radius (r₁) is compared with the identifier read from the second radius (r₂).

## Revendications

1. Structure de magasin (10) qui comporte plusieurs tubes de magasin (12 à 16), dans lesquels sont empilées des doses unitaires, notamment des capsules doseuses (1), à symétrie de révolution, avec de la poudre de café différente et un code d'identification correspondant, lisible par machine, ainsi qu'un dispositif de détection du code d'identification,
**caractérisée**
**en ce que** le dispositif de détection comprend au moins une tête de lecture (27) à lecture linéaire et en ce que la tête de lecture (27) est disposée en dessous des tubes de magasin (12 à 16) et est dirigée vers le haut, sur un plan dans lequel se trouvent des fonds (2) des doses unitaires à symétrie de révolution, de préférence des codes d'identification coaxiaux dans les tubes de magasin (12 à 16), ceci d'une manière telle, que les codes d'identification puissent être lus linéairement.

2. Structure de magasin selon la revendication 1,
**caractérisée**
**en ce que** les tubes de magasin (12 à 16) sont disposés sur un support et peuvent être sélectivement déplacés avec le support, jusque dans une position de prélèvement (18), et en ce que le support présente, sous chaque tube de magasin (12 à 16), un secteur translucide pour la détection par balayage du fond (2) de la capsule doseuse (1).

3. Structure de magasin selon la revendication 2,
**caractérisée**
**en ce que** pour tous les tubes de magasin (12 à 16), il n'est prévu qu'une seule tête de balayage (27) à un poste de lecture, laquelle est disposée sur une trajectoire de déplacement des secteurs, translucides pour la lecture des codes d'identification, du support, déplaçables avec le support, en amont de la position de prélèvement (18) suivant le sens de déplacement.

4. Structure de magasin selon l'une au moins des revendications 1 à 3,
**caractérisée**
**en ce que** les tubes de magasin (12 à 16) sont disposés, sensiblement en cercle, sur un plateau tournant (11) constituant le support, et en ce que, en dessous du plateau tournant (11), est disposé un mécanisme à croix de Malte (20), qui est placé en liaison d'entraînement avec le plateau tournant (11).

5. Structure de magasin selon une ou plusieurs des revendications 1 à 4,
**caractérisée**
**en ce que** le support ou le plateau tournant (11) est ajustable, commandé par le dispositif de détection.

6. Procédé de contrôle pour un code d'identification, lisible par machine, sur une dose unitaire dans une structure de magasin selon les revendications 1 à 5,
**caractérisé**
**en ce qu'**un code à barres (3) formé de cercles concentriques, en tant que code d'identification configuré suivant une symétrie de rotation, est lu de façon linéaire, essentiellement sur l'étendue de son diamètre le plus grand, formé d'un premier demi-diamètre (r₁) et d'un deuxième demi-diamètre (r₂), et en ce que le code d'indentification lu sur le premier demi-diamètre (r₁) est comparé au code d'identification lu sur le deuxième demi-diamétre (r₂).
